# EUROPÄISCHE PATENTSCHRIFT

(11) **EP 3 323 646 B1**
(45) Veröffentlichungstag und Bekanntmachung des Hinweises auf die Patenterteilung: **28.12.2022**
(21) Anmeldenummer: 17195855.6
(22) Anmeldetag: 11.10.2017
(51) Int. Cl.: B60G 11/113, B60G 7/00, B60B 35/00

(54) **ACHSSYSTEM**
AXLE SYSTEM
SYSTÈME D'AXES

(30) Priorität: 31.10.2016 DE 102016120732
(43) Veröffentlichungstag der Anmeldung: 23.05.2018
(73) Patentinhaber: SAF-HOLLAND GmbH, 63856 Bessenbach (DE)
(72) Erfinder: Hartmann, Mark, 63869 Heigenbrücken (DE)
(74) Vertreter: Müller Schupfner & Partner Patent- und Rechtsanwaltspartnerschaft mbB

(56) Entgegenhaltungen:
- EP-A2- 1 958 801
- EP-B1- 1 958 801
- DE-A1-102016 103 306
- DE-C2- 10 029 639
- DE-U- 1 838 603
- GB-A- 452 059
- JP-A- S5 587 606
- US-A- 5 921 570
- US-A1- 2014 138 929
- US-A1- 2015 165 851
- US-B1- 9 446 646

## Beschreibung

Die vorliegende Erfindung betrifft ein Achssystem insbesondere zum Einsatz in Nutzfahrzeugen.

Achssysteme insbesondere zur Verbindung eines Längslenkers mit einem Achsrohr sind aus dem Stand der Technik bekannt. Weiterhin bekannt ist es dabei, dass zur Sicherung des Lenkers gegen Verlagerung relativ zum Achsrohr eine vorwiegend durch Kraftschluss erzeugte Verbindung eingesetzt wird. Hierbei hat es sich insbesondere bewährt, u-förmige Zugelemente einzusetzen, welche das Achsrohr umschlingen und gegenüber einer Klemmplatte, welche wiederum am Längslenker eingreift, verspannt werden. Einer der Nachteile dieser Verbindungsmöglichkeit zwischen Achsrohr und Längslenker ist, dass die Sicherheit gegen Verlagerung oder Verdrehung des Achsrohrs relativ zum Längslenker oftmals nicht ausreichend für die hohen Belastungen in Nutzfahrzeugen ist. Um diesem Nachteil beizukommen, wurden, weiterhin im Stand der Technik bekannt, einzelne Elemente der kraftschlüssigen Verbindung zwischen Achsrohr und Längslenker mit dem Längslenker oder dem Achsrohr verschweißt, so dass die kraftschlüssige Verbindung durch einen zusätzlichen Stoffschluss unterstützt wird. Nachteilig bei dieser Festlegungsmöglichkeit ist, dass die Position des Längslenkers relativ zur Längsachse des Achsrohrs nicht weiter eingestellt werden kann. Es ist daher unmöglich, nach der Herstellung des Stoffschlusses zwischen einem der Befestigungselemente und dem jeweiligen Bauteil am Fahrwerksystem die Montageposition von Achsrohr und Längslenker zu justieren und gegebenenfalls an geänderte Fahrwerkskomponenten anzupassen.

Die EP 1 958 801 A2 betrifft eine Achseinbindung für eine Achseinbindung für eine gefederte Fahrzeugachse mit einem langestreckten Achskörper. Um die Achseinbindung hinsichtlich der im Fahrbetrieb auftretenden seitlichen Kräfte zu verbessern, ist der Achskörper im Einbindungsbereich mit einer Formstruktur versehen, welche den Längslenker und/oder die Zugelemente formkorrespondierend aufnimmt und in Längsrichtung des Achskörpers örtlich bindet.

Die US 2014/0138929 A1 betrifft eine Achsanbindungseinrichtung. Diese umfasst ein erstes und ein zweites U-förmiges Festlegungselement.

Die US 5,921,570 betrifft ein System zur Montage eines Fahrzeugachsgehäuses an einem Fahrzeugaufhängungselement.

Das Dokument US 9,446,646 B1 offenbart ein Achssystem entsprechend dem Oberbegriff des Anspruchs, 1.

Das Dokument US 2015/0165851 A1 offenbart einen alternatives beispielhaftes Achssystem.

Aufgabe der vorliegenden Erfindung ist die Bereitstellung eines Achssystems, welches die im Stand der Technik auftretenden Nachteile beseitigt und insbesondere eine vereinfachte Positionierung des Lenkers relativ zum Achsrohr ermöglicht.

Diese Aufgaben werden gelöst mit einem Achssystem gemäß Anspruch

Erfindungsgemäß umfasst das Achssystem ein Achsrohr und einen Lenker, wobei sich das Achsrohr längs einer Rohrachse erstreckt, wobei eine Verbindungseinheit vorgesehen ist, welche ein Halteelement, ein erstes Klemmteil und eine Krafteinheit aufweist, wobei das Halteelement stoffschlüssig am Achsrohr festgelegt ist, wobei das erste Klemmteil zumindest teilweise auf der dem Achsrohr abgewandten Seite des Lenkers anordenbar und mit dem Lenker in kraftschlüssigen Eingriff bringbar ist, wobei die Krafteinheit ausgelegt ist, eine Klemmkraft vom Halteelement auf das erste Klemmteil mittelbar oder unmittelbar zu übertragen. Das Achssystem, welches insbesondere zum Einsatz in Nutzfahrzeugen, wie beispielsweise einer Zugmaschine eines LKW-Gespannes oder in einem Anhänger, Anwendung findet, umfasst die Hauptkomponenten Achsrohr, Lenker und Verbindungseinheit. Das Achsrohr ist dabei vorzugsweise eine starre Achse, welche sich im Wesentlichen zylinderförmig oder rechteckig mit hohlem Querschnitt längs einer Rohrachse erstreckt. Dabei fällt unter den Begriff Achsrohr vorzugsweise auch ein an einem Achsrohr festgelegter Achsstummel, welcher im Wesentlichen koaxial zur Rohrachse angeordnet ist und der Lagerung eines Fahrzeugrads dient. Weiterhin ist der Lenker bevorzugt der Längslenker eines Nutzfahrzeugs, welcher an seinem ersten distalen Ende schwenkbar am Rahmen des Nutzfahrzeugs aufgehängt ist und im Bereich, in welchem er das Achsrohr kreuzt, am Achsrohr festgelegt werden kann. Der Lenker kann dabei unter anderem ein traditioneller Lenker wie beispielsweise ein Längslenker oder auch ein Federelement wie beispielsweise eine Blattfeder sein. Weiterhin weist der Lenker vorzugsweise einen Eingriffsbereich für ein Federelement, wie beispielsweise eine Spiralfeder oder eine Luftfeder, auf.

Dabei ist der Lenker vorzugsweise als Federstahllenker mit im Wesentlichen rechteckigem Querschnitt ausgebildet. Als Herstellungsmaterial kann aufgrund der Verwendung einer Verbindungseinheit im Sinne der vorliegenden Erfindung ein Material verwendet werden, welches nicht schweißbar ist. So kommt insbesondere Federstahl für die Herstellung des Lenkers in Betracht. Es versteht sich, dass unabhängig von der Festlegungsmethode des Lenkers auch schweißbare Eisenlegierungen zum Einsatz gelangen können. Die Verbindungseinheit besteht aus drei Hauptkomponenten. Zunächst ist ein Halteelement vorgesehen, welches stoffschlüssig am Achsrohr festgelegt ist. Im montierten Zustand des Achssystems ist dabei das Halteelement vorzugsweise am Achsrohr angeschweißt. Weiterhin kommt ein erstes Klemmelement zum Einsatz, welches zumindest teilweise, vorzugsweise überwiegend auf der dem Achsrohr abgewandten Seite des Lenkers angeordnet ist und mit dem Lenker in kraftschlüssigen Eingriff bringbar oder gebracht ist. Die Anordnung des Klemmteils zumindest teilweise oder überwiegend auf der dem Achsrohr abgewandten Seite bedeutet, dass weitere Bereiche des ersten Klemmteils den Lenker auf seinen Seiten jeweils überragen und teilweise umschließen können und somit nicht nur auf der dem Achsrohr abgewandten Seite angeordnet sind. Bevorzugt ist das erste Klemmteil mit ca. 75% bis 95% seines Volumens auf der dem Achsrohr gegenüber liegenden Seite des Lenkers angeordnet, da hierdurch besonders hohe Anpresskräfte bei niedrigem Gesamtgewicht des Achssystems erreicht werden können. Mit Vorteil wird zur Herstellung des Kraftschlusses zwischen dem ersten Klemmteil und dem Lenker vorzugsweise der Hauptteil der vom ersten Klemmteil auf den Lenker übertragenen Kraft auf die, dem Achsrohr abgewandte Seite des Lenkers übertragen, wodurch der Lenker gegen das Achsrohr und/oder gegen das auf dem Achsrohr festgelegte Halteelement gepresst wird. Die Krafteinheit ist vorzugsweise ein Verbund von Bauteilen, welcher ausgelegt ist, die erforderliche Zugkraft oder Anpresskraft zwischen dem Halteelement und dem ersten Klemmteil zu erzeugen. Dabei ist die Krafteinheit vorzugsweise zweiteilig ausgebildet, wobei ein erstes Teil vorzugsweise form- und kraftschlüssig in ein zweites Teil eingreift und wodurch bei der Montage des Achssystems zwischen den beiden Teilen der Krafteinheit eine Verlagerung stattfindet und hierdurch eine elastische Verformung zumindest eines der Teile der Krafteinheit in einer zwischen den Teilen der Krafteinheit wirkenden Zugkraft bzw. Klemmkraft resultiert. Dass die Klemmkraft sowohl mittelbar als auch unmittelbar zwischen dem Halteelement und dem ersten Klemmteil wirken kann, bedeutet, dass zur Erhöhung der Funktionssicherheit insbesondere bei starken Schwingungen am Achssystem weitere, vorzugsweise elastische Bauteile zwischen der Krafteinheit und dem ersten Klemmteil zum Eingriff gebracht werden können. Der Vorteil des erfindungsgemäßen Achssystems ist, dass die Vorzüge einer stoffschlüssigen Verbindung mit den Vorzügen einer kraftschlüssigen Verbindung zwischen dem Achsrohr und dem Lenker kombiniert werden können, so dass einerseits eine hohe Funktionssicherheit herstellbar ist und andererseits eine Demontage des Achssystems und insbesondere eine versetzte Anordnung des Lenkers relativ zum Achsrohr möglich ist.

Besonders bevorzugt wirkt die Klemmkraft parallel zu einer Kraftachse, welche orthogonal zur Rohrachse verläuft. Dies bedeutet insbesondere für den Fall, dass nur eine Krafteinheit vorgesehen ist, dass die Achse, entlang derer die von der Krafteinheit aufgebrachte Klemmkraft wirkt, die Rohrachse im Wesentlichen orthogonal schneidet. Es versteht sich, dass für den Fall, dass eine Vielzahl von Krafteinheiten vorgesehen ist, die jeweils resultierende aller aufgebrachten Kräfte orthogonal zur Rohrachse verläuft, wobei die einzelnen Klemmkräfte auch entlang von Achsen wirken können, welche windschief zur Rohrachse angeordnet sind. Der Vorteil bei der Etablierung einer aus zumindest zwei Einzelkräften resultierenden Klemmkraft, welche im Wesentlichen orthogonal zur Rohrachse verläuft, ist, dass keine Rotationsmomente im Verbindungsbereich zwischen dem Achsrohr und dem Lenker durch die Krafteinheit erzeugt werden, welche eine Schwächung des Achssystems bedeuten würden.

Mit Vorteil weist die Krafteinheit ein erstes Kraftelement und ein zweites Kraftelement auf, wobei das erste Kraftelement im Wesentlichen rotationssymmetrisch um die Kraftachse ausgebildet ist. Mit Vorteil besteht dabei die Krafteinheit aus einem ersten Kraftelement, welches als Gewindebolzen ausgebildet ist, und einem zweiten Kraftelement, welches mit einem korrespondierenden Innengewinde versehen ist, wie beispielsweise eine Mutter. Als im Wesentlichen rotationssymmetrische Ausbildung des ersten Kraftelements wird dabei im Rahmen der vorliegenden Erfindung auch ein Außengewinde angesehen, welches zwar per se nicht rotationssymmetrisch um die Kraftachse ist, sich aber bezogen auf seine Außen- oder Innenerstreckung jeweils rotationssymmetrisch um die Kraftachse erstreckt. Im Rahmen der vorliegenden Erfindung ist es dabei bevorzugt, dass das erste Kraftelement keine Krümmung aufweist, welche eine Abweichung von der Kraftachse aufweist. Insbesondere soll also kein U-Bügel wie beim aus dem Stand der Technik bekannten Achssystem zum Einsatz gelangen. Dies hat den Vorteil, dass sämtliche im ersten Kraftelement auftretenden Kräfte jeweils ohne Querkomponenten als reine Zugkräfte auftreten und auf diese Weise mit geringerem Materialeinsatz höhere Kräfte aufgebracht werden können.

Erfindungsgemäß weist das Halteelement eine Eingriffsgeometrie auf, m mit welcher die Krafteinheit derart in Eingriff bringbar ist, dass zumindest in einer Richtung parallel zur Kraftachse ein Formschluss zwischen der Krafteinheit und dem Halteelement hergestellt ist. Die Eingriffsgeometrie des Halteelements ist vorzugsweise derart ausgebildet, dass zwischen der Krafteinheit und dem Halteelement eine längs der Kraftachse wirkende Hinterschneidung gebildet wird. Vorzugsweise ist dabei die Eingriffsgeometrie derart ausgelegt, dass nur in einer Richtung parallel zur Kraftachse dieser Formschluss eine Kraftübertragung zwischen der Krafteinheit und dem Halteelement ermöglicht. Bevorzugt kann auch der Kontaktbereich zwischen Krafteinheit, bzw. insbesondere deren erstem Kraftelement, und Halteelement, insbesondere im Bereich dessen Eingriffsgeometrie, eine reibungserhöhende Oberflächengestaltung vorgesehen sein, die insbesondere als Aufrauhung oder Profilierung ausgebildet ist. Die reibungserhöhende Oberflächengestaltung kann an einem der Elemente Krafteinheit und Halteelement oder beiden vorgesehen sein.

Erfindungsgemäß ist die Eingriffsgeometrie dabei ausgelegt, die Krafteinheit an einer von zumindest zwei, längs der Rohrachse voneinander beabstandeten Eingriffspositionen festzulegen. In einer ersten erfindungsgemäßen Ausführungsform ist dabei eine Eingriffsgeometrie derart ausgebildet, dass die Krafteinheit an zumindest zwei Positionen im formschlüssigen Eingriff mit dem Halteelement bringbar ist. Dies kann dadurch erreicht werden, dass die Eingriffsgeometrie als im Wesentlichen langlochförmige Aussparung mit einer entsprechenden Anschlagfläche, zwischen welcher ein Formschluss zwischen der Krafteinheit und der Eingriffsgeometrie herstellbar ist, ausgebildet ist.

Alternativ hierzu können auch mehrere Eingriffsgeometrien am Halteelement ausgebildet sein, welche derart voneinander beabstandet sind, dass verschiedene Befestigungspositionen zwischen dem Halteelement und dem Lenker ausgewählt werden können. Vorzugsweise ist dabei die Anzahl der Eingriffsgeometrien größer als die Anzahl der eingesetzten Krafteinheiten, so dass eine Krafteinheit mit einer von mehreren Eingriffsgeometrien in Eingriff gebracht werden kann. Dabei ist der Abstand der Eingriffspositionen voneinander vorzugsweise kleiner als die Lenkerbreite. In einer besonders bevorzugten Ausführungsform sind dabei zumindest drei Befestigungspositionen an der Eingriffsgeometrie oder über eine Vielzahl von Eingriffsgeometrien einstellbar. Der Vorteil der Möglichkeit, die Krafteinheit an verschiedenen Eingriffspositionen am Halteelement festzulegen, liegt darin, dass zum einen verschiedene Lenkerbreiten im Achssystem ohne weiteres verwendet werden können und zum anderen an ein und demselben Verbund aus Halteelement und Achsrohr verschiedene Befestigungspositionen für einen Lenker durch einen Monteur jederzeit eingestellt werden können.

Vorzugsweise sind zwei Krafteinheiten vorgesehen, welche parallel zur Rohrachse beabstandet, je eine Klemmkraft auf das erste Klemmteil übertragen. Durch den Einsatz von zwei Krafteinheiten, wobei an jeder Seite des Lenkers, d.h. parallel zur Rohrachse versetzt, je eine Krafteinheit zwischen dem Halteelement und dem ersten Klemmteil wirkt, kann erreicht werden, dass der Lenker stabiler mit dem Achsrohr in Verbindung bringbar ist. Darüber hinaus kann durch den Einsatz von zwei Krafteinheiten die Wahrscheinlichkeit für einen Totalausfall des Achssystems verringert werden, da auch bei Reduzierung der Klemmkraft an einer der Krafteinheiten ein vollständiges Ablösen des Lenkers vom Achsrohr relativ unwahrscheinlich ist, da stets eine zweite Krafteinheit zur Absicherung der kraftschlüssigen Verbindung zwischen Lenker und Rohrachse bereitsteht. Darüber hinaus kann durch den Einsatz von zwei Krafteinheiten auch ein Verschwenken des Lenkers um seine Längsachse relativ zum Achsrohr verhindert werden. Weiterhin ist durch den Einsatz von zwei Krafteinheiten keine Bohrung im Lenker erforderlich, wodurch die Kerbwirkungen im Material des Lenkers verringert werden können und insbesondere ein dünnerer Lenker eingesetzt werden kann, welcher ein geringeres Gewicht aufweist.

Vorzugsweise ist ein zweites Klemmteil vorgesehen, welches die von der Krafteinheit aufgebrachte Klemmkraft an das erste Klemmteil überträgt, wobei das zweite Klemmteil für elastische Verformung optimiert ist. Das zweite Klemmteil ist dabei vorzugsweise im Wesentlichen ein Federelement, welches dafür ausgelegt ist, durch eigene elastische Verformung einen höheren Verformungsweg bei der Kraftübertragung von der Krafteinheit auf das erste Klemmteil bereitzustellen, welcher insbesondere bei starken Schwingungen im Achssystem zur Verfügung steht, um eine gleichmäßige Anpressung des ersten Klemmteils auf den Lenker und des Lenkers wiederum auf das Achsrohr oder das Halteelement zu erreichen. Mit Vorteil ist das zweite Klemmteil dabei mehrfach gewunden und aus vorzugsweise Rundstahl ausgeführt, wobei insbesondere Federstahl verwendet werden kann, welcher einen besonders großen Anteil an elastischer Verbiegung, d.h. im hookeschen Verformungsbereich, zulässt. Hierdurch kann insbesondere ein möglichst großer Verformungsweg im Material des zweiten Klemmteils gespeichert werden, wobei auch bei starken Schwingungen mit großer Amplitude und während des Betriebs des Nutzfahrzeugs auftretenden Vibrationen stets eine gleichmäßige Klemmkraft auf das erste Klemmteil übertragen wird, wodurch die Betriebssicherheit des Achssystems deutlich erhöht werden kann. Auf diese Weise lässt sich insbesondere der Vorteil eines nicht gekrümmten ersten Kraftelements mit einem gekrümmt ausgebildeten zweiten Klemmteil, welches besonders für elastische Verformung optimiert ist, kombinieren.

Bevorzugt ist das zweite Klemmteil als Federelement ausgebildet, wobei das zweite Klemmteil einen ersten Stützbereich zur Abstützung an dem Halteelement und einen zweiten Stützbereich zur Abstützung am ersten Klemmteil aufweist, wobei zwischen zwei Stützbereichen oder zwischen erstem und zweiten Stützbereich die Krafteinheit am zweiten Klemmteil eingrifft. Bevorzugt sind die Stützbereiche des zweiten Klemmteils als gekrümmte Abschnitte ausgebildet, wodurch sich insbesondere mit möglichst geringer Kerbwirkung eine Kraft vom zweiten Klemmteil auf das erste Klemmteil sowie auf das Halteelement übertragen lässt. Durch Bereitstellung eines bestimmten Wegs bzw. Abstands längs der Erstreckungsachse der jeweiligen Abschnitte des zweiten Klemmteils zwischen dem Krafteinleitungspunkt durch die Krafteinheit und der jeweiligen Abstützung in einem der Stützbereiche kann ein besonders langer verbiegbarer Bereich am zweiten Klemmteil bereitgestellt werden, wodurch sich ein besonders großer Verformungsweg im zweiten Klemmteil speichern lässt.

Besonders bevorzugt weist das zweite Klemmteil zwei erste Stützbereiche auf, wobei zwischen den beiden ersten Stützbereichen die Krafteinheit eingreift. Hierdurch kann eine stabile Lagerung des zweiten Klemmteils sowohl am ersten Klemmteil als auch am Halteelement erreicht werden. Gleichzeitig ergibt sich aus dieser Ausbildung, das mehrere Abschnitte des zweiten Klemmteils gleichzeitig und im Wesentlichen unabhängig voneinander die eine Klemmkraft zwischen dem ersten Klemmteil, dem Lenker und dem Halteelement übertragen, wodurch höhere Kräfte übertragen werden können.

Bevorzugt ist das zweite Klemmteil W-förmig ausgebildet. Eine W-förmige Ausbildung des zweiten Klemmteils erlaubt es, besonders große Hebelarme zwischen den jeweils sich verformenden Abschnitten des zweiten Klemmteils bereitzustellen, wobei die Krafteinheit vorzugsweise in der mittleren Schlaufe bzw. dem mittleren gekrümmten Abschnitt des zweiten Klemmteils eingreift. Auf diese Weise kann besonders zuverlässig auch bei großen Amplituden der im Betrieb auftretenden Schwingungen eine gleichmäßige Anpressung des Lenkers an das Achsrohr oder das Halteelement erreicht werden.

Besonders bevorzugt weist das erste Klemmteil auf seiner dem Lenker abgewandten Seite eine Ausformung zum formschlüssigen Eingriff mit dem zweiten Klemmteil auf. Um über die kraftschlüssige Verbindung zwischen dem ersten Klemmteil und dem zweiten Klemmteil hinaus auch einen Formschluss zwischen diesen Teilen zu ermöglichen, weist das erste Klemmteil Ausformungen auf. Diese Ausformungen sind vorzugsweise als lokale Rücksprünge ausgebildet, in welchen das zweite Klemmteil mit dem jeweils zweiten Stützabschnitt eingreift und zumindest gegen Verlagerung parallel zur Rohrachse relativ zum ersten Klemmteil gesichert ist. Auf diese Weise ist eine zuverlässige Verbindung zwischen dem zweiten Klemmteil und dem ersten Klemmteil möglich und es können insbesondere auch längs oder parallel zur Rohrachse wirkende Kräfte aufgefangen werden und die Sicherheit der durch das Achssystem hergestellten Verbindung zwischen dem Lenker und dem Achsrohr ist erhöht.

Vorzugsweise weist das Halteelement auf seiner dem Achsrohr abgewandten Seite eine Positionierhilfe zur Abstützung und zum formschlüssigen Eingriff des ersten Klemmteils und/oder des zweiten Klemmteils auf. Analog zu der Ausformung am ersten Klemmteil weist auch das Halteelement vorzugsweise eine Eingriffsgeometrie auf, welche einen zumindest in eine Richtung wirkenden Formschluss zwischen dem ersten Klemmteil und dem Halteelement und/oder dem zweiten Klemmteil und dem Halteelement ermöglicht. Auf diese Weise ist es möglich, die Befestigungsposition des ersten Klemmteils sowie auch des zweiten Klemmteils relativ zum Halteelement vorzugeben und gleichzeitig ein Verrutschen der Bauteile zueinander längs oder parallel zur Rohrachse zu verhindern.

Erfindungsgemäß ist die Eingriffsgeometrie als Aussparung am Halteelement ausgebildet, wobei die Eingriffsgeometrie ihre größte Erstreckung parallel zur Rohrachse aufweist. Wie bereits zuvor beschrieben, ist die Eingriffsgeometrie ausgelegt, vorzugsweise eine Vielzahl von Befestigungspositionen bzw. Eingriffspositionen der Krafteinheit an dem Halteelement zu ermöglichen. Hierzu ist die Eingriffsgeometrie vorzugsweise als langlochähnliche Aussparung am Halteelement ausgebildet, wobei die größte Erstreckung der Eingriffsgeometrie entlang der Rohrachse verläuft. Es versteht sich, dass der Bezug auf die Rohrachse insbesondere dann möglich ist, wenn das Halteelement am Achsrohr festgeschweißt ist. Auf diese Weise kann eine Vielzahl von Befestigungspositionen sowohl einer Krafteinheit als auch einer Vielzahl von Krafteinheiten relativ zum Achsrohr eingestellt werden, wodurch sich die Variabilität des Achssystems deutlich erhöht.

In einer ersten bevorzugten Ausführungsform ist die Eingriffsgeometrie dabei an einer ihrer kurzen Seiten offen bzw. geöffnet, um die Krafteinheit in die Eingriffsgeometrie parallel zur Rohrachse einschieben zu können. Insbesondere für den Fall, dass die Krafteinheit einen verdickten, flanschartigen Abschnitt aufweist, welcher insbesondere mit der als Langloch ausgebildeten Eingriffsgeometrie eine längs der Kraftachse wirkende Hinterschneidung bildet, kann diese vorzugsweise seitlich auf einfache Weise in die Eingriffsgeometrie und in den Zwischenraum zwischen dem Halteelement und dem Achsrohr eingeführt werden. Auf diese Weise ist eine besonders einfache Montage des Achssystems möglich, wobei der entsprechende kraftübertragende verdickte Abschnitt an der Krafteinheit besonders breit und somit stabil ausgeführt werden kann.

Alternativ bevorzugt ist benachbart zur Eingriffsgeometrie ein Einführbereich mit größerem Querschnitt als die Eingriffsgeometrie vorgesehen, wobei die Eingriffsgeometrie und der Einführbereich gemeinsam als umseitig geschlossene Aussparung ausgebildet sind, wobei die Krafteinheit parallel zur Kraftachse durch den Einführbereich hindurchführbar ist, um mit der Eingriffsgeometrie in Eingriff zu gelangen. Vorzugsweise ist unmittelbar benachbart zur Eingriffsgeometrie ein Einführbereich vorgesehen, welcher ebenfalls als Aussparung ausgebildet ist, aber einen größeren Querschnitt, vorzugsweise in einer orthogonal zur Kraftachse liegenden Ebene auf, aufweist. Durch diesen größeren Querschnitt des Einführbereichs kann der verdickte Abschnitt einer Krafteinheit parallel zur Kraftachse eingeführt werden, um dann quer zur Kraftachse seitlich in den Bereich der Eingriffsgeometrie verschoben zu werden. Der Vorteil dieser Ausführungsform ist, dass das Halteelement und die daran ausgebildete Eingriffsgeometrie und der Einführbereich nicht einseitig offen sein müssen, sondern umseitig geschlossen ausgebildet sein können. Hierdurch kann eine umlaufende Schweißnaht zwischen dem Achsrohr und dem Halteelement ausgebildet werden, welche eine höhere Festigkeit der Verbindung zwischen Halteelement und Achsrohr ermöglicht und insbesondere den Einfluss von Kerbwirkung und Spannungsspitzen an stumpf endenden Schweißnähten vermeidet.

Vorzugsweise weist das Halteelement eine Vielzahl von als Gewindebohrungen ausgebildeten Eingriffsgeometrien auf. Alternativ zu der Ausbildung der Eingriffsgeometrie als Langloch, an welcher eine Vielzahl von Befestigungspositionen einstellbar ist, können auch eine Vielzahl von Eingriffsgeometrien am Halteelement ausgebildet sein, welche besonders bevorzugt als Gewindebohrungen ausgebildet sind. Auf diese Weist lässt sich eine definierte Anzahl von Befestigungspositionen über die Anzahl von voneinander beabstandeten Gewindebohrungen voreinstellen. Der Vorteil gegenüber der zuvor beschriebenen Ausbildung der Eingriffsgeometrie als Langloch liegt darin, dass die Krafteinheit einfacher und leichter, nämlich als einfacher Gewindebolzen ausgebildet sein kann.

Darüber hinaus ist ein nicht erfindungsgemäßes Beispiel eines Verfahrens zur Herstellung eines Achssystems vorgesehen, welches folgende Schritte umfasst:
a) Bereitstellen eines Achsrohres, eines Lenkers und einer Verbindungseinheit;
b) stoffschlüssiges Festlegen eines Halteelements der Verbindungseinheit am Achsrohr;
c) Anordnen des Lenkers am Achsrohr oder am Halteelement und eines ersten Klemmteils auf der dem Achsrohr abgewandten Seite des Lenkers;
d) Herstellen eines zumindest formschlüssigen Eingriffs zwischen einer Krafteinheit und dem Halteelement und zwischen der Krafteinheit und dem ersten Klemmteil;
e) Erzeugen einer Vorspannkraft in der Krafteinheit, welche zwischen dem ersten Klemmteil und dem Halteelement den Lenker und das Achsrohr zusammenpresst.

Mit Hilfe dieses Herstellungsverfahrens ist es nach vollständiger Montage zum einen möglich, das Achssystem wieder zu demontieren. Zum anderen kann während des Montagevorgangs und insbesondere nach der Herstellung der stoffschlüssigen Festlegung des Halteelements am Achsrohr noch immer die Befestigungsposition des Lenkers relativ zum Achsrohr eingestellt werden. Hierdurch ergibt sich eine größere Variabilität des mit dem Verfahren hergestellten Achssystems und eine vereinfachte Anpassung an verschiedene Fahrwerke unter Einsatz desselben Achsrohrs und daran festgelegten Halteelements.

Mit Vorteil erfolgt die stoffschlüssige Verbindung zwischen dem Halteelement und dem Achsrohr bevor die Krafteinheit in Eingriff mit dem Halteelement gebracht wird. Auf diese Weise kann insbesondere bevorzugt in einem ersten Arbeitsschritt, vorzugsweise auch räumlich getrennt von den nachfolgenden Montageschritten, eine Schweißverbindung zwischen dem Halteelement und dem Achsrohr hergestellt werden, bevor der Verbund aus Halteelement und Achsrohr zur weiteren Montage in den nächsten Montagebereich gebracht wird. Auf diese Weise kann insbesondere das benötigte Herstellungswerkzeug für die einzelnen Verfahrensschritte an definierten und konzentrierten Orten in der Produktionshalle des Herstellers von Achssystemen bereitgehalten werden. Insbesondere können an einem ersten Ort in der Halle die Schweißverbindungen zwischen dem Halteelement und dem Achsrohr hergestellt werden, während die Montage der Komponenten zur Herstellung der kraftschlüssigen Verbindung zwischen Lenker und Achsrohr an einem anderen Ort erfolgen kann.

Weitere Vorteile und Merkmale der vorliegenden Erfindung ergeben sich aus der nachfolgenden Beschreibung mit Bezug auf die beigefügten Figuren. Es versteht sich dabei, dass einzelne Merkmale, die nur in einer der dargestellten Ausführungsformen explizit beschrieben sind, auch in anderen Ausführungsformen zum Einsatz gelangen können und sollen, sofern dies nicht explizit ausgeschlossen wurde oder sich aufgrund technischer Gegebenheiten verbietet.

Es zeigen:

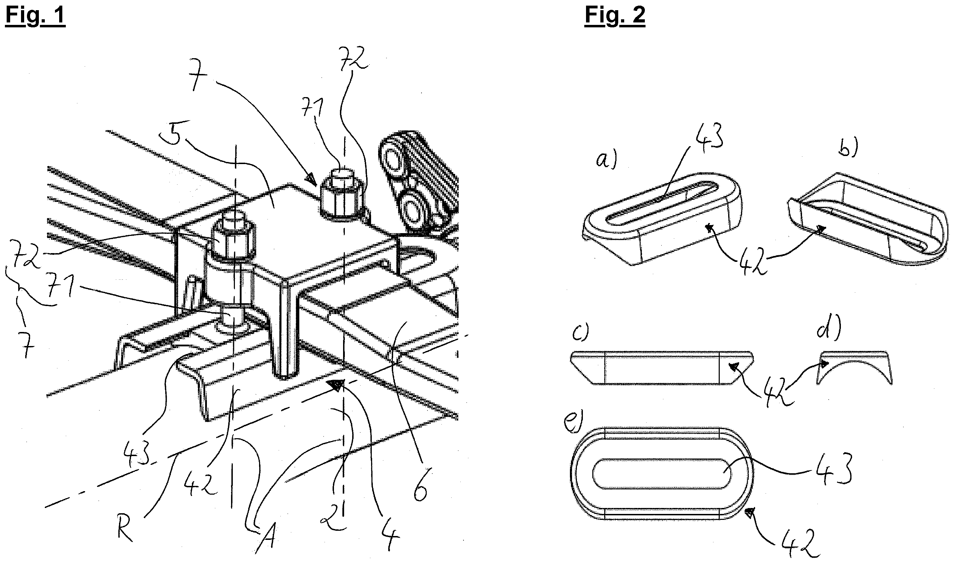

- Fig. 1 bis Fig. 8: jeweils perspektivische Ansichten verschiedener Ausführungsformen und einzelner Bauteile eines erfindungsgemäßen Achssystems.

Fig. 1 zeigt eine perspektivische Ansicht einer ersten Ausführungsform des erfindungsgemäßen Achssystems. Dabei ist ein Lenker 6 über eine Klemmverbindung an einem Achsrohr 2 festgelegt. Das Achsrohr 2 ist vorzugsweise entweder das hohlkörperförmige Achsrohr oder der daran festgelegte Achsstummel einer starren Achse eines Nutzfahrzeugs und erstreckt sich im Wesentlichen rotationssymmetrisch um eine Rohrachse R. Am Achsrohr 2 stoffschlüssig festgelegt ist ein Halteelement 42, welches eine Eingriffsgeometrie 43 aufweist. Das Halteelement 42 und die daran vorgesehene, vorzugsweise langlochartige Eingriffsgeometrie 43 sind zu einer Seite (zum Betrachter hingewandt) hin offen. Durch diese Öffnung in der Eingriffsgeometrie 43 kann ein erstes Kraftelement 71 einer Krafteinheit 7 eingeschoben werden. Die in Fig. 1 dargestellte Ausführungsform weist vorzugsweise zwei Krafteinheiten 7 auf. Zur Montage des in Fig. 1 dargestellten Achssystems wird zunächst die hintere der beiden Krafteinheiten 7 in die Eingriffsgeometrie 43 eingeführt, anschließend wird der Lenker 6 platziert, wobei anschließend oder auch vor der Platzierung des Lenkers 6 die zweite Krafteinheit 7 in die Eingriffsgeometrie 43 eingeführt wird. Anschließend wird ein erstes Klemmteil 5 von oben längs der Kraftrichtungen A der Krafteinheiten 7 auf den Lenker 6 aufgesetzt, wobei ein zweites Kraftelement 72 an jeder der Krafteinheiten 7 in Eingriff gebracht wird, um eine Klemmkraft auf das erste Klemmteil 5 auszuüben. Durch diese Klemmkraft wird das erste Klemmteil 5 gegen den Lenker 6 gepresst, welcher wiederum gegen das Achsrohr 2 bzw. das daran festgelegte zweite Halteelement 42 gedrückt wird. Es kann auf diese Weise eine kraftschlüssige Verbindung zwischen dem Achsrohr 2 und dem Lenker 6 hergestellt werden. Weiterhin ist gezeigt, dass das erste Klemmteil 5 Eingriffsabschnitte aufweist, welche sich im Wesentlichen in Richtung des Halteelements 42 erstrecken und an dessen Seiten vorzugsweise formschlüssig in Eingriff bringbar sind. Auf diese Weise kann eine Verlagerungsbewegung des ersten Klemmteils 5 relativ zum Halteelement 42 entlang der Längsrichtung des Lenkers 6 abgestützt werden, wodurch die Krafteinheit 7, insbesondere das erste Kraftelement 71, bei Auftreten von Kräften in diese Richtung entlastet wird. Das Halteelement 42, die Krafteinheit 7 und das erste Klemmteil 5 bilden zusammen die Verbindungseinheit 4, welche zur Herstellung der kraftschlüssigen Verbindung zwischen dem Lenker 6 und dem Achsrohr 2 ausgelegt ist.

Fig. 2 zeigt verschiedene Ansichten a) bis e) einer bevorzugten Ausführungsform eines erfindungsgemäßen Eingriffselements 42. Dieses Eingriffselement 42 weist eine Eingriffsgeometrie auf, welche als Langloch ausgebildet ist. Dabei ist im Gegensatz zu der in Fig. 1 gezeigten Ausführungsform das Halteelement 42 mit seiner Eingriffsgeometrie 43 im Wesentlichen umlaufend und geschlossen ausgebildet. Hierdurch kann eine umlaufende und ohne offene Enden ausgebildete Schweißnaht zwischen dem Halteelement 42 und dem Achsrohr 2 ausgebildet werden, welche eine höhere Festigkeit und insbesondere geringere Ermüdungserscheinungen an den offenen Enden einer Schweißnaht erreicht. Es versteht sich, dass das in Fig. 2 gezeigte Halteelement 42 auch bei der in Fig. 1 gezeigten Ausführungsform eingesetzt werden kann. Hierfür ist es erforderlich, dass die breiten, flanschartig ausgebildeten Abschnitte der ersten Kraftelemente 71 derart ausgebildet sind, dass diese zunächst verdreht in die Eingriffsgeometrie 43 eingeführt werden können und anschließend durch Drehung um die Kraftachse A in Eingriff mit der Eingriffsgeometrie 43 gebracht werden können.

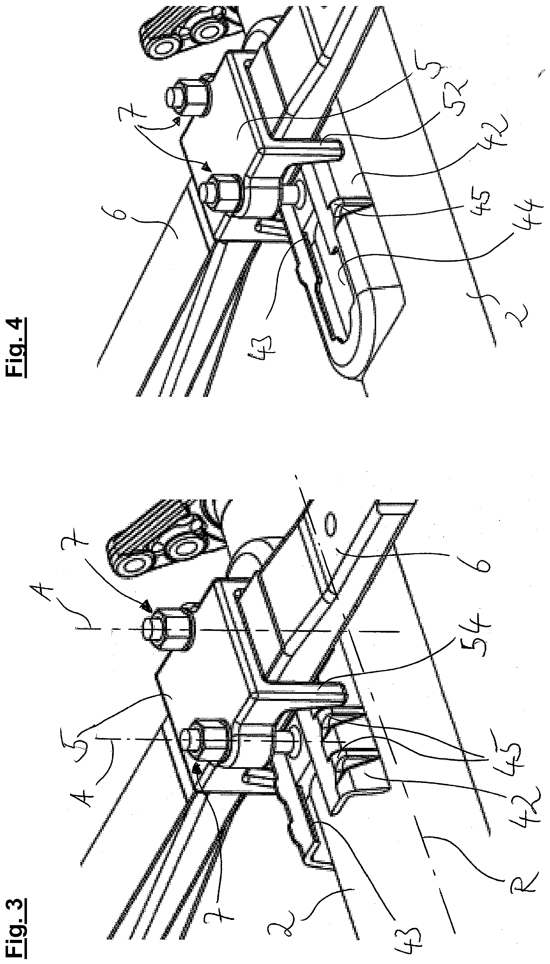

Fig. 3 zeigt eine weitere perspektivische Ansicht einer bevorzugten Ausführungsform eines erfindungsgemäßen Achssystems. Diese basiert im Wesentlichen auf der in Fig. 1 gezeigten Ausführungsform, wobei am Halteelement 42 vorzugsweise Positionierhilfen 45 vorgesehen sind. Diese Positionierhilfen 45 können insbesondere bevorzugt mit den am ersten Klemmteil 5 vorgesehenen Vorsprüngen 54 in Eingriff gebracht werden, um eine bestimmte Position des ersten Klemmteils 5 relativ zum Halteelement 42 voreinzustellen und somit auch eine Positionierung des Lenkers 6 relativ zum Halteelement 42 bei der Montage zu erleichtern. Weiterhin dienen die Positionierhilfen 45 dazu, ein Verrutschen des Verbundes aus Krafteinheit 7 und erstem Klemmteil 5 sowie dem Lenker 6 relativ zum Achsrohr 2 längs der Rohrachse R zu verhindern.

Die Ausführungsform von Fig. 4 kombiniert Merkmale der in Fig. 2 und 3 gezeigten Ausführungsformen. So ist das Halteelement 42 mit seiner Eingriffsgeometrie 43 wie in Fig. 2 geschlossen ausgebildet. Weiterhin sind Positionierhilfen 45 vorgesehen, welche jeweils mit einem Vorsprung 54 am ersten Klemmteil 5 in Kontakt gelangen können, um den Verbund aus Lenker 6 und erstem Klemmteil 5 entlang der Rohrachse R zu positionieren und zu halten. Am Halteelement 42 ist vorzugsweise ein Einführbereich 44 ausgebildet, welcher benachbart zur Eingriffsgeometrie 43 angeordnet ist. Durch diesen Einführbereich 44 kann der flanschartig ausgebildete Bereich des ersten Kraftelements 71 der Krafteinheit 7 längs der Kraftachse A eingeführt werden und anschließend seitlich in den Bereich der Eingriffsgeometrie 43 verschoben werden. Hierdurch ist es möglich, besonders breite Flanschabschnitte am ersten Kraftelement 71 vorzusehen, welche nicht durch Verdrehen (siehe Erklärung zu Fig. 2) in die Eingriffsgeometrie 43 eingeführt werden können. Es versteht sich, dass durch das Vorsehen eines Einführbereiches 44 ein einseitig offenes Halteelement 42 nicht erforderlich ist.

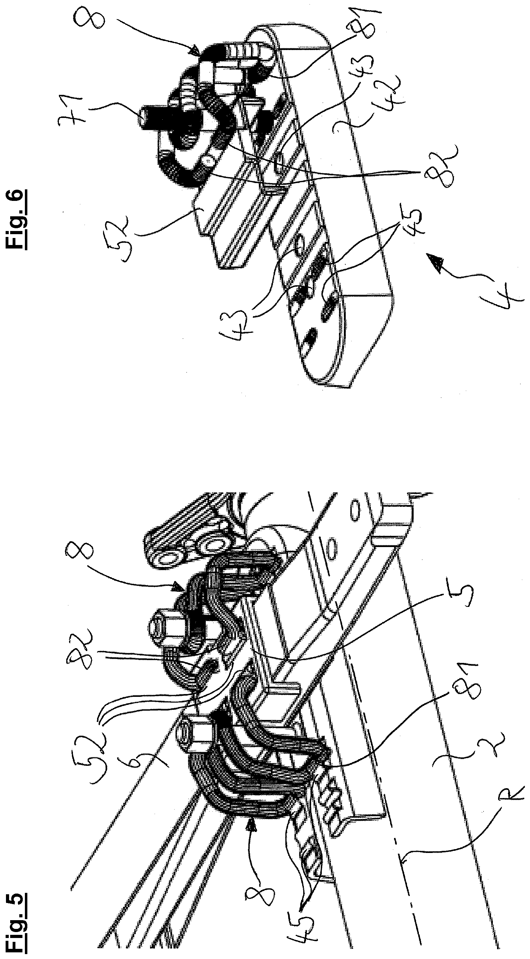

Fig. 5 zeigt eine weitere Ausführungsform eines erfindungsgemäßen Achssystems, wobei zusätzlich zu dem ersten Klemmteil 5 und dem Halteelement 42 ein zweites Klemmteil 8 vorgesehen ist. Das zweite Klemmteil 8 ist vorzugsweise als mehrfach gekrümmtes federartiges Element ausgebildet, wobei ein Eingriffsbereich für die Krafteinheit und ein erster Stützbereich zur Abstützung am Halteelement 42 sowie ein zweiter Stützbereich zur Abstützung am ersten Klemmteil 5 vorgesehen ist. Darüber hinaus weist das Halteelement 42 Positionierhilfen 45 auf, welche insbesondere für den Eingriff mit dem ersten Stützbereich 81 des zweiten Klemmteils 8 ausgebildet sind. Diese sind vorzugsweise als lokale Rücksprünge ausgebildet, wobei zur einfacheren Herstellung diese Rücksprünge insbesondere jeweils zwischen zwei Vorsprüngen angeordnet sind. Auch das erste Klemmteil 5 weist entsprechende Ausformungen 52 auf, welche zum formschlüssigen Eingriff mit dem zweiten Stützbereich 82 des zweiten Klemmteils 8 ausgebildet sind. Die Positionierhilfen 45 und die Ausformungen 52 dienen dabei jeweils derformschlüssigen Sicherung der Stützbereiche 81, 82 des zweiten Klemmteils 8 gegen Verlagerung, im Wesentlichen parallel oder längs zur Rohrachse R. Weiterhin kann durch diese Positionierhilfen 45 und Ausformungen 52 eine bestimmte Position des Lenkers 6 relativ zum Achsrohr ausgewählt werden, wobei in dieser jeweiligen Position dann die Krafteinheit verspannt wird und der Lenker 6 über die Anpressung des ersten Klemmteils 5 und des zweiten Klemmteils 8 am Achsrohr 2 festgelegt wird. Bei der in Fig. 5 dargestellten Ausführungsform ist das zweite Klemmteil vorzugsweise W-förmig ausgebildet. Die Mitte des W's kann hierbei einen dritten Stützbereich ausbilden, der mit dem zweiten Kraftelement 72 in Eingriff steht bzw. gebracht werden kann. Bevorzugt ist der dritte Stützbereich im Normallastzustand von dem Klemmteil 5 weiter beabstandet als der zweite Stützbereich und gelangt erst bei einer Verkippung des Klemmteils 5 mit diesem in Eingriff.

Fig. 6 zeigt eine weitere alternativ bevorzugte Ausführungsform der erfindungsgemäßen Verbindungseinheit 4. Diese weist ein Halteelement 42 auf, an welchem anstelle einer Eingriffsgeometrie 43, wie in den zuvor dargestellten Ausführungsformen, eine Vielzahl von Eingriffsgeometrien 43 vorgesehen ist. Diese Eingriffsgeometrien 43 sind als Gewindebohrung ausgebildet, wobei jeweils ein als Gewindebolzen ausgebildetes erstes Kraftelement 71 in Eingriff mit der Eingriffsgeometrie gebracht werden kann. Weiterhin bevorzugt sind die Positionierhilfen 45 am Halteelement 42 als einfache Mulden oder lokale Rücksprünge ausgebildet. Die Ausformung 52 am ersten Klemmteil 5 ist vorzugsweise als mittiger Steg ausgebildet, welcher zum einen eine lokale Materialverstärkung des ersten Klemmteils 5 bildet und zum anderen ein Verrutschen der jeweils vorgesehenen zweiten Stützbereiche 82 der zweiten Klemmteile 8 (nur eines dargestellt) verhindert. Der Vorteil des im Wesentlichen vollkörperförmig ausgebildeten Halteelements 42 ist, dass dieses höhere Kräfte aufnehmen kann und insbesondere weniger verformt wird, wenn eine stoffschlüssige Verbindung zwischen dem Halteelement 42 und dem Achsrohr 2 hergestellt wird. Nachteilig ist das höhere Gewicht. Somit ist die in Fig. 6 gezeigte Ausführungsform insbesondere für Schwerlast-Nutzfahrzeuge geeignet, bei welchen eine besonders feste Verbindung zwischen dem Lenker 6 und dem Achsrohr 2 herstellbar sein muss, wobei es weniger auf Gewichtseinsparungen am Achssystem ankommt.

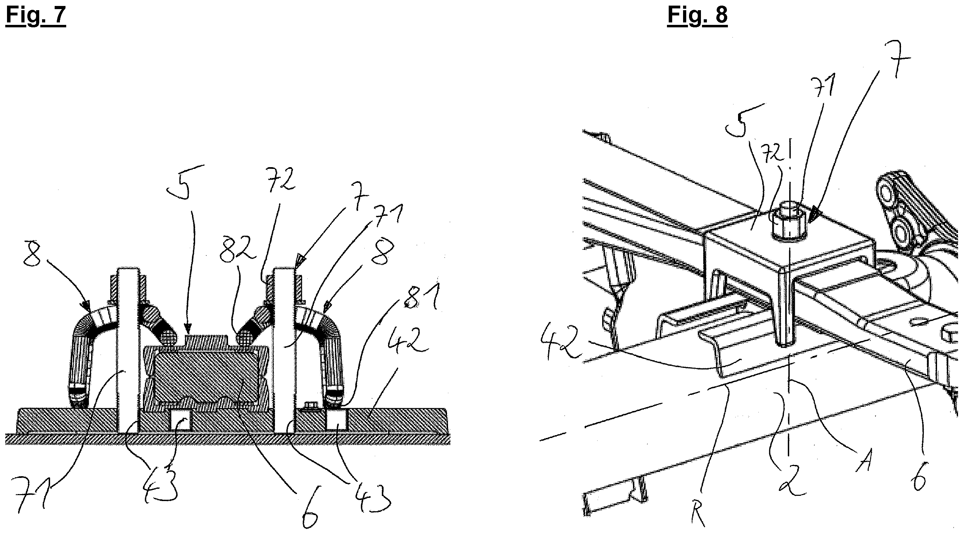

Fig. 7 zeigt einen Schnitt durch eine weitere bevorzugte Ausführungsform eines erfindungsgemäßen Achssystems. Dabei ist gezeigt, dass das erste Klemmteil 5 an seiner dem Lenker zugewandten Seite lokale Vorsprünge aufweist, welche dazu ausgelegt sind, in das Material des Lenkers einzudringen und so einen Formschluss zwischen dem ersten Klemmteil 5 und dem Lenker 6 herzustellen. Auf diese Weise kann ein Verrutschen des Lenkers 6 in seiner Längsachse relativ zum ersten Klemmteil 5 verhindert werden. Darüber hinaus ist dem ersten Klemmteil 5 gegenüberliegend ein weiteres Bauteil angeordnet, welches ebenfalls Vorsprünge aufweist, die in das Material des Lenkers 6 eindringen und somit einen lokalen Formschluss herstellen. Diese Vorsprünge zum Eingriff mit dem Lenker 6 könnten auch am Halteelement 42 ausgebildet sein, wobei mit Vorteil das zusätzliche Bauteil von Fig. 7 eingespart werden würde. Es versteht sich, dass derartige Eingriffsmittel auch bei den zuvor beschriebenen Ausführungsformen am ersten Klemmteil und/oder am Halteelement 42 vorgesehen sein können, ohne dass dies näher beschrieben wurde. Die Ausbildung der Krafteinheiten 7 sowie der zweiten Klemmteile 8 entspricht der Ausbildung dieser entsprechenden Bauteile in den zuvor beschriebenen Ausführungsformen. Gezeigt ist weiterhin, das in Fig. 6 gezeigte Halteelement 42, welches mit als Gewindebohrungen ausgebildeten Eingriffsgeometrien 43 ausgestattet ist.

Fig. 8 zeigt eine weitere bevorzugte Ausführungsform des erfindungsgemäßen Achssystems. Dabei ist anstelle der in den zuvor beschrieben Ausführungsformen verwendeten zwei Krafteinheiten 7 nur eine Krafteinheit 7 verwendet. Entsprechend ist im ersten Klemmteil 5 und im Lenker 6 eine zentrale Bohrung ausgebildet, durch welche hindurch das erste Kraftelement 71 hindurchreicht. Mit Vorteil verläuft dabei die resultierende Klemmkraft kollinear zur Kraftachse A der Krafteinheit 7. Diese Ausführungsform hat den Vorteil, dass durch den Formschlüssigen Eingriff zwischen dem ersten Kraftelement 71 mit dem Lenker 6 und dem ersten Klemmteil 5 eine Verlagerungssicherung auch quer zur Kraftachse A gegeben ist. Weiterhin ist die Montage gegenüber den zuvor beschriebenen Ausführungsformen vereinfacht, da nur eine Krafteinheit 7 am Achssystem verschraubt werden muss. Die übrigen Merkmale der Ausführungsform von Fig. 8 gleichen den in Fig. 1 beschriebenen Merkmalen.

### Bezugszeichen:

- 2 -: Achsrohr
- 4 -: Verbindungseinheit
- 5 -: erstes Klemmteil
- 6 -: Lenker
- 7 -: Krafteinheit
- 8 -: zweites Klemmteil
- 42 -: Halteelement
- 43 -: Eingriffsgeometrie
- 44 -: Einführbereich
- 45 -: Positionierhilfe
- 52 -: Ausformungen
- 54 -: Vorsprung
- 71 -: erstes Kraftelement
- 72 -: zweites Kraftelement
- 81 -: erster Stützbereich
- 82 -: zweiter Stützbereich
- A -: Kraftachse
- R -: Rohrachse

## Patentansprüche

1. Achssystem, insbesondere zum Einsatz in Nutzfahrzeugen, das Achssystem umfassend ein
Achsrohr (2) und einen Lenker (6),
wobei sich das Achsrohr (2) längs einer Rohrachse (R) erstreckt,
wobei eine Verbindungseinheit (4) vorgesehen ist, welche ein Halteelement (42), ein erstes Klemmteil (5) und eine Krafteinheit (7) aufweist,
wobei das erste Klemmteil (5) zumindest teilweise auf der dem Achsrohr (2) abgewandten Seite des Lenkers (6) anordenbar und mit dem Lenker (6) in kraftschlüssigen Eingriff bringbar ist,
wobei die Krafteinheit (7) ausgelegt ist, eine Klemmkraft vom Halteelement (42) auf das erste Klemmteil (5) mittelbar oder unmittelbar zu übertragen,
wobei das Halteelement (42) eine Eingriffsgeometrie (43) aufweist, mit welcher die Krafteinheit (7) derart in Eingriff bringbar ist, dass zumindest in einer Richtung parallel zu einer Kraftachse (A) ein Formschluss zwischen der Krafteinheit (7) und dem Halteelement (42) hergestellt ist,
wobei die Eingriffsgeometrie (43) derart ausgelegt ist, dass die Krafteinheit (7) an zumindest zwei längs der Rohrachse (R) voneinander beanstandeten Eingriffspositionen im formschlüssigen Eingriff mit dem Halteelement (42) bringbar ist,
wobei das Halteelement (42) stoffschlüssig am Achsrohr (2) festgelegt ist,
wobei die Eingriffsgeometrie (43) als Aussparung am Halteelement (42) ausgebildet ist,
**dadurch gekennzeichnet, dass**
die Eingriffsgeometrie (43) ihre größte Erstreckung parallel zur Rohrachse (R) aufweist.

2. Achssystem nach Anspruch 1,
wobei die Klemmkraft parallel zu der Kraftachse (A) wirkt, welche orthogonal zur Rohrachse (R) verläuft.

3. Achssystem nach Anspruch 2,
wobei die Krafteinheit (7) ein erstes Kraftelement (71) und ein zweites Kraftelement (72) aufweist,
wobei das erste Kraftelement (71) im Wesentlichen rotationssymmetrisch um die Kraftachse (A) ausgebildet ist.

4. Achssystem nach einem der vorhergehenden Ansprüche,
wobei zwei Krafteinheiten (7) vorgesehen sind, die parallel zur Rohrachse (R) beabstandet voneinander je eine Klemmkraft auf das erste Klemmteil (5) übertragen.

5. Achssystem nach einem der vorhergehenden Ansprüche,
wobei ein zweites Klemmteil (8) vorgesehen ist, welches die von der Krafteinheit (7) aufgebrachte Klemmkraft an das erste Klemmteil (5) überträgt, wobei das zweite Klemmteil (8) für elastische Verformung optimiert ist.

6. Achssystem nach Anspruch 5,
wobei das zweite Klemmteil (8) als Federelement ausgebildet ist,
wobei das zweite Klemmteil (8) einen ersten Stützbereich (81) zur Abstützung an dem Halteelement (42) und einen zweiten Stützbereich (82) zur Abstützung am ersten Klemmteil (5) aufweist,
wobei zwischen zwei Stützbereichen (81, 82) die Krafteinheit (7) am zweiten Klemmteil (8) eingreift.

7. Achssystem nach Anspruch 6,
wobei das zweite Klemmteil (8) zwei erste Stützbereiche (81) aufweist,
wobei zwischen den beiden ersten Stützbereichen (81) die Krafteinheit (7) eingreift.

8. Achssystem nach Anspruch 6 oder 7,
wobei das zweite Klemmteil (8) W-förmig ausgebildet ist.

9. Achssystem nach einem der Ansprüche 5 bis 8,
wobei das erste Klemmteil (5) auf seiner dem Lenker (6) abgewandten Seite eine Ausformung (52) zum formschlüssigen Eingriff mit dem zweiten Klemmteil (8) aufweist.

10. Achssystem nach einem der Ansprüche 5 bis 9,
wobei das Halteelement (42) auf seiner dem Achsrohr (2) abgewandten Seite eine Positionierhilfe (44) zur Abstützung und zum formschlüssigen Eingriff des zweiten Klemmteils (8) aufweist.

11. Achssystem nach einem der vorhergehenden Ansprüche,
wobei die Eingriffsgeometrie (43) an einer ihrer kurzen Seiten offen ist, um die Krafteinheit (7) in die Eingriffsgeometrie (43) parallel zur Rohrachse (R) einschieben zu können.

## Claims

1. Axle system, in particular for use in commercial vehicles, the axle system comprising an axle tube (2) and a handlebar (6),
wherein the axle tube (2) extends along a tube axis (R),
wherein a connecting unit (4) is provided which has a retaining element (42), a first clamping part (5) and a force unit (7),
wherein the first clamping part (5) can be arranged at least partially on the side of the handlebar (6) facing away from the axle tube (2) and can be brought into non-positive engagement with the handlebar (6),
wherein the force unit (7) is designed to transmit a clamping force from the retaining element (42) to the first clamping part (5) indirectly or directly,
wherein the retaining element (42) has an engagement geometry (43) with which the force unit (7) can be brought into engagement in such a way that a form closure is produced between the force unit (7) and the retaining element (42) at least in a direction parallel to a force axis (A),
wherein the engagement geometry (43) is designed in such a way that the force unit (7) can be brought into positive engagement with the retaining element (42) at least two engagement positions spaced apart along the tube axis (R),
wherein the retaining element (42) is fixed to the axle tube (2) in a material-locking manner,
wherein the engagement geometry (43) is formed as a recess on the retaining element (42),
**characterized in that** the engagement geometry (43) has its greatest extension parallel to the tube axis (R).

2. Axle system according to claim 1,
wherein the clamping force acts parallel to the force axis (A), which is orthogonal to the tube axis (R).

3. Axle system according to claim 2,
wherein the force unit (7) comprises a first force element (71) and a second force element (72),
wherein the first force element (71) is substantially rotationally symmetrical about the force axis (A).

4. Axle system according to one of the preceding claims,
wherein two force units (7) are provided which transmit a clamping force to the first clamping part (5) parallel to the tube axis (R) at a distance from each other.

5. Axle system according to one of the preceding claims,
wherein a second clamping part (8) is provided which transmits the clamping force applied by the force unit (7) to the first clamping part (5),
wherein the second clamping part (8) is optimised for elastic deformation.

6. Axle system according to claim 5,
wherein the second clamping part (8) is formed as a spring element,
wherein the second clamping part (8) has a first support region (81) for support on the retaining element (42) and a second support region (82) for support on the first clamping part (5),
wherein the force unit (7) engages on the second clamping part (8) between two support regions (81, 82).

7. Axle system according to claim 6,
wherein the second clamping part (8) has two first support regions (81),
wherein the force unit (7) engages between the two first support regions (81).

8. Axle system according to claim 6 or 7,
wherein the second clamping part (8) is W-shaped.

9. Axle system according to one of the claims 5 to 8,
wherein the first clamping part (5) has, on its side facing away from the handlebar (6), a shaped portion (52) for positive engagement with the second clamping part (8).

10. Axle system according to one of the claims 5 to 9,
wherein the retaining element (42) has, on its side facing away from the axle tube (2), an insertion area (44) for supporting and positively engaging the second clamping part (8).

11. Axle system according to one of the preceding claims,
wherein the engagement geometry (43) is open on one of its short sides in order to be able to push the force unit (7) into the engagement geometry (43) parallel to the tube axis (R).

## Revendications

1. Système d'essieu, destiné en particulier à l'utilisation dans des véhicules utilitaires, le système d'essieu comprenant un tube d'essieu (2) et un bras oscillant (6),
dans lequel
le tube d'essieu (2) s'étend le long d'un axe de tube (R),
il est prévu une unité de liaison (4), laquelle présente un élément de retenue (42), une première pièce de serrage (5) et une unité d'application de force (7),
la première pièce de serrage (5) peut être disposée au moins partiellement sur le côté du bras oscillant (6) détourné du tube d'essieu (2) et peut être mise en engagement par coopération de force avec le bras oscillant (6),
l'unité d'application de force (7) est conçue pour transmettre directement ou indirectement une force de serrage de l'élément de retenue (42) à la première pièce de serrage (5),
l'élément de retenue (42) présente une géométrie d'engagement (43) avec laquelle l'unité d'application de force (7) peut être mise en engagement de telle sorte qu'une liaison par coopération de forme est établie entre l'unité d'application de force (7) et l'élément de retenue (42) au moins dans une direction parallèle à un axe d'application de force (A),
la géométrie d'engagement (43) est conçue de manière à permettre à l'unité d'application de force (7) d'être mise en engagement par coopération de forme avec l'élément de retenue (42) dans au moins deux positions d'engagement espacées l'une de l'autre le long de l'axe de tube (R),
l'élément de retenue (42) est immobilisé par coopération de matière sur le tube d'essieu (2),
la géométrie d'engagement (43) est réalisée sous forme d'évidement sur l'élément de retenue (42),
**caractérisé en ce que**
la géométrie d'engagement (43) présente sa plus grande extension parallèlement à l'axe de tube (R).

2. Système d'essieu selon la revendication 1,
dans lequel
la force de serrage agit parallèlement à l'axe d'application de force (A) qui est orthogonal à l'axe de tube (R).

3. Système d'essieu selon la revendication 2,
dans lequel
l'unité d'application de force (7) présente un premier élément d'application de force (71) et un deuxième élément d'application de force (72),
le premier élément d'application de force (71) est réalisé sensiblement à symétrie de révolution autour de l'axe d'application de force (A).

4. Système d'essieu selon l'une des revendications précédentes,
dans lequel
il est prévu deux unités d'application de force (7) qui, parallèlement à l'axe de tube (R) et à distance l'une de l'autre, transmettent chacune une force de serrage à la première pièce de serrage (5).

5. Système d'essieu selon l'une des revendications précédentes,
dans lequel
il est prévu une deuxième pièce de serrage (8) qui transmet la force de serrage appliquée par l'unité d'application de force (7) à la première pièce de serrage (5),
la deuxième pièce de serrage (8) est optimisée pour une déformation élastique.

6. Système d'essieu selon la revendication 5,
dans lequel
la deuxième pièce de serrage (8) est réalisée sous forme d'élément de ressort,
la deuxième pièce de serrage (8) présente une première zone d'appui (81) pour s'appuyer sur l'élément de retenue (42), et une deuxième zone d'appui (82) pour s'appuyer sur la première pièce de serrage (5),
l'unité d'application de force (7) s'engage sur la deuxième pièce de serrage (8) entre deux zones d'appui (81, 82).

7. Système d'essieu selon la revendication 6,
dans lequel
la deuxième pièce de serrage (8) présente deux premières zones d'appui (81),
l'unité d'application de force (7) s'engage entre les deux premières zones d'appui (81).

8. Système d'essieu selon la revendication 6 ou 7,
dans lequel
la deuxième pièce de serrage (8) est réalisée en forme de W.

9. Système d'essieu selon l'une des revendications 5 à 8,
dans lequel
sur son côté détourné du bras oscillant (6), la première pièce de serrage (5) présente une conformation (52) destinée à s'engager par coopération de forme avec la deuxième pièce de serrage (8).

10. Système d'essieu selon l'une des revendications 5 à 9,
dans lequel
sur son côté détourné du tube d'essieu (2), l'élément de retenue (42) présente un élément d'aide au positionnement (44) pour l'appui et pour l'engagement par coopération de forme de la deuxième pièce de serrage (8).

11. Système d'essieu selon l'une des revendications précédentes,
dans lequel
la géométrie d'engagement (43) est ouverte sur l'un de ses petits côtés afin de permettre d'insérer l'unité d'application de force (7) dans la géométrie d'engagement (43) parallèlement à l'axe de tube (R).
